# EUROPÄISCHE PATENTSCHRIFT

(11) **EP 2 476 564 B1**
(45) Veröffentlichungstag und Bekanntmachung des Hinweises auf die Patenterteilung: **19.03.2014**
(21) Anmeldenummer: 12150117.5
(22) Anmeldetag: 04.01.2012
(51) Int. Cl.: B60C 23/04, B60C 23/00

(54) **Fahrzeug und Verfahren zum Zuordnen der Positionen von Radelektroniken eines Fahrzeugs**
Vehicle and method for allocating the positions of wheel electronics of a vehicle
Véhicule et procédé d'attribution des positions de systèmes électroniques de roues d'un véhicule

(30) Priorität: 18.01.2011 DE 102011002800
(43) Veröffentlichungstag der Anmeldung: 18.07.2012
(73) Patentinhaber: Aktiebolaget SKF, 41 550 Göteborg (SE)
(72) Erfinder: Graf, Jens, 97422 Schweinfurt (DE); Hütten, Clemens, 97422 Schweinfurt (DE)
(74) Vertreter: Schonecke, Mitja

(56) Entgegenhaltungen:
- EP-A1- 1 059 177
- WO-A2-02/39137
- DE-A1-102006 026 526
- US-A1- 2007 159 315

## Beschreibung

Die Erfindung betrifft ein Fahrzeug, insbesondere ein Kraftfahrzeug, wie z.B. eine Zugmaschine, oder einen Anhänger, dessen Räder jeweils eine Radelektronik zugeordnet ist und das einen Empfänger zum drahtlosen Empfangen von von den Radelektroniken stammenden Signalen aufweist.

Um insbesondere im Betrieb des Fahrzeugs eine Person über den Zustand der Räder gegebenenfalls über den Zustand der entsprechenden Reifen des Fahrzeugs zu informieren, können den Rädern des Fahrzeugs Radelektroniken zugeordnet sein, die drahtlos z.B. eine Information über den Zustand des Rades an einen Empfänger des Fahrzeugs senden. Diese Information kann ausgewertet werden, um z.B. die Person über einen kritischen Zustand des relevanten Rades, gegebenenfalls des zugeordneten Reifens, zu informieren.

Die DE 10 2006 026 526 A1 offenbart ein Fahrzeug mit einem Anhänger und einer den Anhänger ziehenden Zugmaschine, welches ein Reifendrucküberwachungssystem aufweist. Das Reifenüberwachungssystem umfasst eine Empfangseinheit, die an einem rückwärtigen Ende der Zugmaschine montiert ist und eine Richtantenne aufweist, und den Rädern des Anhängers zugeordnete Reifenluftdruck-Sendeeinheiten. Die Richtantenne ist so orientiert, dass sie eine stärkere Empfangsempfindlichkeit in Bezug auf eine Richtung von dem Anhänger als in Bezug auf andere Richtungen aufweist.

Die US 2007/0159315 A1 offenbart den Empfangsbereich der Antenne des Empfängers wahlweise in Richtung bestimmter Räder des Fahrzeugs auszurichten.

Aufgabe der Erfindung ist es, ein Fahrzeug mit einem drahtlosen Empfänger anzugeben, der verbessert Signale von den Rädern des Fahrzeugs zugeordneten Radelektroniken empfängt.

Die Aufgabe der Erfindung wird gelöst durch ein Fahrzeug, aufweisend einen Fahrzeuggrundkörper, mehrere Räder zum Fortbewegen des Fahrzeugs, den Rädern zugeordnete Radelektroniken, die eingerichtet sind, wenigstens einen dem entsprechenden Rad und/oder dem Reifen des Rads zugeordneten Parameter zu ermitteln und eine Information über den ermittelten Parameter umfassende Signale drahtlos zu senden, eine Vorrichtung zum Erkennen einer Kurvenfahrt des Fahrzeugs und einen am oder im Fahrzeuggrundkörper angeordneten drahtlosen Empfänger mit einer als Richtantenne ausgebildeten Antenne, der eingerichtet ist, mittels seiner Antenne die von den Radelektroniken stammenden Signale drahtlos zu empfangen und die Antenne wahlweise derart einzustellen, dass deren Empfangsbereich in verschiedene Richtungen ausgerichtet ist und derart ausgeführt ist, den Empfangsbereich seiner Antenne derart wahlweise einzustellen, dass dieser bei einer Linkskurvenfahrt die linke Seite des Fahrzeugs und bei einer Rechtskurvenfahrt die rechte Seite des Fahrzeugs abdeckt. Das erfindungsgemäße Fahrzeug ist z.B. ein Kraftfahrzeug, insbesondere ein Lastkraftfahrzeug, ein Anhänger oder auch ein Kraftfahrzeug mit Anhänger.

Das erfindungsgemäße Fahrzeug umfasst demnach den Fahrzeuggrundkörper an dem oder in dem der Empfänger angeordnet ist. Der Empfänger ist z.B. am Fahrwerk oder gegebenenfalls im Fahrerhaus des Fahrzeugs angeordnet. Den Rädern des Fahrzeugs sind Radelektroniken zugeordnet, die insbesondere im Betrieb des Fahrzeugs wenigstens einen Parameter ihres Rades und/oder des entsprechenden Reifens ermitteln. Der Parameter ist z.B. der Reifendruck des entsprechenden Reifens. Die Radelektroniken sind außerdem derart ausgebildet, dass sie drahtlos eine Information über den Parameter, gegebenenfalls auch mit einer der Radelektronik zugeordneten Kennnummer drahtlos senden. Diese Information empfängt der Empfänger, sodass der empfangene Parameter z.B. mittels einer Auswertevorrichtung ausgewertet und die Auswertung z.B. auf einer Anzeigevorrichtung des Fahrzeugs angezeigt werden kann.

Erfindungsgemäß ist nun der Empfänger derart ausgebildet, dass er den Empfangsbereich seiner Antenne wahlweise einstellen bzw. einrichten kann. Somit ist es möglich, dass entsprechend der Einstellung Signale aus einer bestimmten Richtung mit stärkerem Pegel empfangen werden können als andere Signale.

Somit wird es ermöglicht, z.B. gezielt den Empfangsbereich auf eine Radelektronik oder eine Gruppe von Radelektroniken auszurichten, um insbesondere die Positionen einzelner Radelektroniken oder Gruppen von Radelektroniken am Fahrzeug zu bestimmen.

Der Empfänger kann beispielsweise im Wesentlichen zentral bezüglich der Radelektroniken im oder am Fahrzeuggrundkörper angeordnet sein. Dann ist es relativ einfach möglich, dass der Empfänger seine Antenne derart einstellt, dass deren Empfangsbereich wahlweise möglichst nur in Richtung einer einzelnen Radelektronik ausgerichtet ist. Dann ist es möglich, dass der Empfänger seine Antenne derart einstellt, dass diese möglichst nur Signale der bestimmten Radelektronik empfängt und die Signale der restlichen Radelektroniken nicht oder zumindest mit geringerem Pegel.

Um die verschiedenen Empfangsbereiche einzustellen, kann nach einer Variante des erfindungsgemäßen Fahrzeugs die als Richtantenne ausgebildete Antenne des Empfängers als eine Phased-Array-Antenne oder phasengesteuerte Gruppenantenne mit mehreren Teilantennen ausgebildet sein, wobei der Empfänger derart ausgebildet sein kann die Teilantennen derart Phasen anzusteuern, um eine Richtwirkung der Richtantenne entsprechend dem gewünschten Empfaugsbereichzu erhalten.

Das erfindungsgemäße Fahrzeug weist die Vorrichtung zum Erkennen einer Kurvenfahrt des Fahrzeugs auf. Diese Vorrichtung kann z.B. als ein Beschleunigungssensor ausgebildet sein. Der Empfänger ist derart ausgeführt, den Empfangsbereich seiner Antenne derart wahlweise einzustellen, dass dieser bei einer Linkskurvenfahrt die linke Seite des Fahrzeugs und bei einer Rechtskirvenfahrt die rechte Seite des Fahrzeugs abdeckt. Dies ist dann besonders vorteilhaft, wenn nach einer Ausfuhrungsform des erfindungsgemäßen Fahrzeugs dieses einen Anhänger und eine den Anhänger ziehende Zugmaschine umfasst, in oder an deren Fahrzeuggrundkörper der Empfänger angeordnet ist, und der Empfänger eingerichtet ist, die von den Radelektroniken des Anhängers stammenden Signale zu empfangen.

Ein weiterer Aspekt der Erfindung betrifft demnach ein Verfahren zum Zuordnen der Positionen der Radelektroniken des erfindungsgemäßen Fahrzeugs, welches den Anhänger und die Zugmaschine umfasst, aufweisend wahlweise Einstellen der Antenne des Empfängers derart, dass deren Empfangsbereich in Richtung auf eine bestimmte der Radelektroniken oder eine Gruppe bestimmter Radelektroniken gerichtet ist. Das erfindungsgemäße Verfahren weist zusätzlich folgende Verfahrensschritte auf:
- Erkennen einer Kurvenfahrt des Fahrzeugs und
- Einstellen des Empfangsbereichs der Antenne derart, dass dieser bei einer Linkskurvenfahrt die linke Seite des Fahrzeugs und bei einer Rechtskurvenfahrt die rechte Seite des Fahrzeugs abdeckt.

Ist nämlich der Empfänger an der Zugmaschine, z.B. in oder an deren Fahrerhaus angeordnet, dann verbessert sich der Funkkanal beispielsweise bei einer Linkskurve zwischen dem Empfänger und den linksseitigen Radelektroniken des Anhängers, wodurch die Signale dieser Radelektroniken mit einem höheren Pegel mittels des Empfängers empfangen werden im Vergleich zu einer Geradeausfahrt. Diese Information kann dann dazu verwendet werden, die entsprechenden Radelektroniken der linken Seite des Anhängers zuzuordnen. Entsprechendes gilt für die rechtsseitigen Radeelektroniken während des Durchfahrens einer Rechtskurve.

Ausführungsbeispiele der Erfindung sind in den beigefügten schematischen Zeichnungen exemplarisch dargestellt. Es zeigen:
Fig. 1 eine Draufsicht eines Kraftfahrzeugs,
Fig. 2 eine Draufsicht eines Anhängers,
Fig. 3 eine Draufsicht eines Fahrerhauses,
Fig. 4 Draufsichten einer Zugmaschine mit Anhänger und
Fig. 5 ein Flussdiagramm.

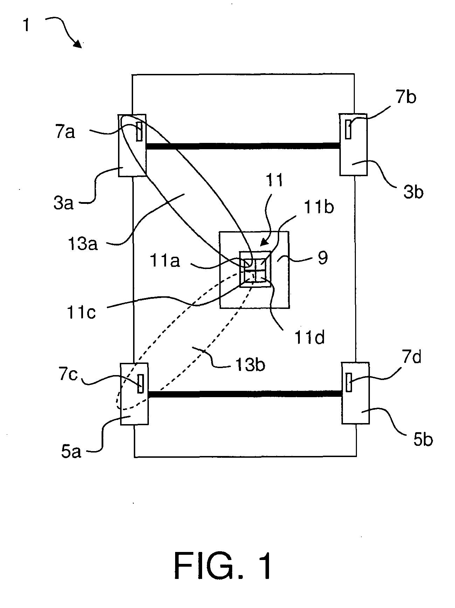

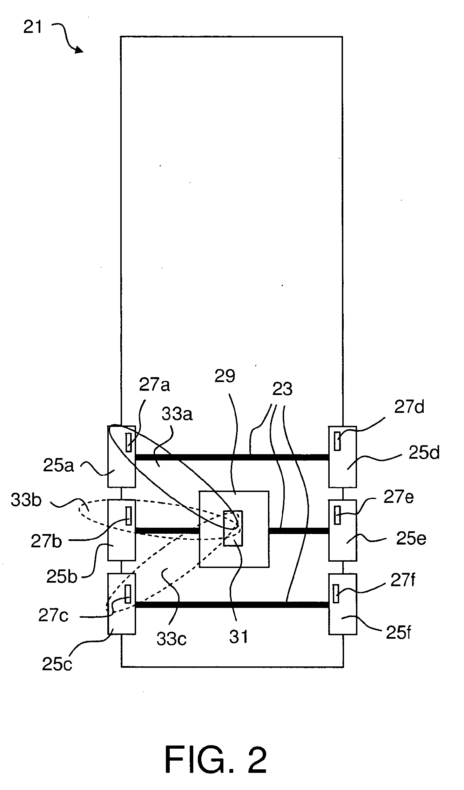

Die Figuren 1 und 2 zeigen Draufsichten von Fahrzeugen.

Im Falle des vorliegenden Ausführungsbeispiels ist das in der Fig. 1 gezeigte Fahrzeug als ein Kraftfahrzeug 1 ausgebildet. Das Kraftfahrzeug 1 ist z.B. ein Lastkraftfahrzeug, insbesondere eine Zugmaschine und vorzugsweise eine Sattelzugmaschine.

Im Falle des vorliegenden Ausführungsbeispiels ist das in der Fig. 2 gezeigte Fahrzeug als ein Anhänger 21 ausgebildet. Der Anhänger 21 ist z.B. ein Sattelanhänger, der z.B. von dem in der Fig. 1 gezeigten Kraftfahrzeug 1 gezogen werden kann, wenn dieses als Sattelzugmaschine ausgebildet ist.

Im Falle des vorliegenden Ausführungsbeispiels weist das Kraftfahrzeug 1 zwei Vorderräder 3a, 3b mit jeweils einem Reifen und zwei Hinterräder 5a, 5b mit jeweils einem Reifen auf. Den Rädern 3a, 3b, 5a, 5b ist jeweils eine Radelektronik 7a-7d zugeordnet, die automatisch Parameter des jeweiligen Rads 3a, 3b, 5a, 5b und/oder dessen Reifen beispielsweise dessen Reifendruck, ermitteln, wie dies im Prinzip dem Fachmann bekannt ist. Die Radelektroniken 7a-7d sind beispielsweise in allgemein bekannter Weise an den Felgen der Vorder- und Hinterräder 3a, 3b, 5a, 5b befestigt. Es ist auch möglich, dass die Radelektroniken 7a-7d in ihren zugeordneten Reifen integriert sind.

Des Weiteren weist das Kraftfahrzeug 1 einen drahtlosen Empfänger 9 auf, der insbesondere am Fahrwerk des Kraftfahrzeugs 1 angeordnet ist. Der Empfänger 9 ist insbesondere mittig bezüglich der Räder 3a, b, 5a, b am Kraftfahrzeug 1 befestigt. Der Empfänger 9 umfasste insbesondere eine Antenne 11, die eingerichtet ist, drahtlos Signale zu empfangen.

Die Radelektroniken 7a-7d umfassen jeweils z.B. einen nicht näher dargestellten Sensor, der eingerichtet ist, dem relevanten Parameter zugeordnete Signale zu erzeugen und einen drahtlosen Sender, der eingerichtet ist, drahtlos eine Information über den Parameter an den Empfänger 9 zu senden. Der Sensor und der Sender werden beispielsweise von einer Batterie mit elektrischer Energie versorgt.

Die Radelektroniken 7a-7d sind im Falle des vorliegenden Ausführungsbeispiels dafür vorgesehen, die den Kraftfahrzeug 1 lenkende Person insbesondere während der Fahrt über den aktuellen Zustand der Räder 3a, 3b, 5a, 5b und/oder den entsprechenden Reifen zu informieren.

Im Falle des vorliegenden Ausführungsbeispiels ist der Empfänger 9 bzw. dessen Antenne 11 derart ausgebildet, dass der Empfangsbereich 13a, b der Antenne 11 in verschiedene Richtungen ausgerichtet werden kann. Dies wird z.B. dadurch realisiert, indem die Antenne 11 als eine einstellbare Richtantenne, insbesondere als eine sogenannte Phased-Array-Antenne oder phasengesteuerte Gruppenantenne ausgebildet ist, die mehreren Teilantennen 11a-d aufweist. Die einzelnen Teilantennen 11a-d können phasengesteuert angesteuert werden, um die Richtwirkung der Antenne 11 entsprechend dem gewünschten Empfangsbereich 13a, b zu erhalten. Somit ist es möglich, dass der Empfänger 9 gezielt Signale von einer bestimmten Radelektronik 7a-d empfängt, zumindest jedoch Signale von einer bestimmten Radelektronik 7a mit einem höheren Pegel empfängst als Signale von den restlichen Radelektroniken 7b-d.

In dem in der Fig. 1 gezeigten Ausführungsbeispiel sind beispielsweise die Teilantennen 11a, d derart phasengesteuert angesteuert, dass die Richtwirkung der Antenne 11 in Richtung der Radelektronik 7a des linken Vorderrads 7a ausgerichtet ist, sodass in der Fig. 1 der Empfangsbereich 13a durch einen ovalförmigen Bereich gekennzeichnet ist, der von einer durchgezogenen Linie begrenzt ist.

Sollen dagegen beispielsweise zumindest hauptsächlich die Signale der Radelektronik 7c des linken Hinterrades 5a empfangen werden, dann können die Teilantennen 11a-d entsprechend phasengesteuert angesteuert werden, damit die Antenne 11 in Richtung dieser Radelektronik 5a ausgerichtet ist. Der entsprechende Empfangsbereich 13b ist durch einen ovalförmigen Bereich gekennzeichnet, der von einer gestrichelten Linie begrenzt ist.

Die von dem Empfänger 9 empfangenen Signale können dann von einer nicht näher dargestellten Auswertevorrichtung ausgewertet und die Auswertung der das Kraftfahrzeug 1 lenkenden Person z.B. mittels einer Anzeigevorrichtung angezeigt werden.

Im Falle des vorliegenden Ausführungsbeispiels weist der in der Fig. 2 gezeigte Anhänger 21 drei direkt hintereinander angeordnete Achsen 23 und sechs Räder 25a-f mit Reifen auf. Den Rädern 25a-f ist jeweils eine Radelektronik 27a-27f zugeordnet, die entsprechend den Radelektroniken 7a-d des Kraftfahrzeugs 1 der Fig. 1 ausgeführt sind.

Insbesondere am Fahrwerk des Anhängers 21 ist ein drahtloser Empfänger 29 angeordnet, der insbesondere mittig bezüglich der Räder 25a-f am Anhänger 21 befestigt ist. Der Empfänger 29 umfasst insbesondere eine Antenne 31, die eingerichtet ist, drahtlos Signale der Radelektroniken 27a-f zu empfangen.

Im Falle des vorliegenden Ausführungsbeispiels ist der Empfänger 29 bzw. dessen Antenne 31 derart ausgebildet, dass der Empfangsbereich 33a-c der Antenne 31 in verschiedene Richtungen ausgerichtet werden kann. Dies wird z.B. dadurch realisiert, indem die Antenne 31 als eine einstellbare Richtantenne, insbesondere als eine sogenannte Phased-Array-Antenne oder phasengesteuerte Gruppenantenne ausgebildet ist, die mehreren Teilantennen aufweist. Die einzelnen Teilantennen können phasengesteuert angesteuert werden, um die Richtwirkung der Antenne 31 entsprechend dem gewünschten Empfangsbereich zu erhalten. Somit ist es möglich, dass der Empfänger 29 gezielt Signale von einer bestimmten Radelektronik 27a-f empfängt, zumindest jedoch Signale von einer bestimmten Radelektronik 27a mit einem höheren Pegel empfängst als Signale von den restlichen Radelektroniken 27b-f.

In dem in der Fig. 2 gezeigten Ausführungsbeispiel sind beispielsweise die Teilantennen derart phasengesteuert angesteuert, dass die Richtwirkung der Antenne 31 in Richtung der Radelektronik 27a ausgerichtet ist, sodass in der Fig. 2 der Empfangsbereich 33a durch einen ovalförmigen Bereich gekennzeichnet ist, der von einer durchgezogenen Linie begrenzt ist.

Sollen dagegen beispielsweise zumindest hauptsächlich die Signale der Radelektronik 27b empfangen werden, dann werden die Teilantennen derart phasengesteuert angesteuert, dass die Richtwirkung der Antenne 31 in Richtung der Radelektronik 27b ausgerichtet ist, sodass in der Fig. 2 der Empfangsbereich 33b durch einen ovalförmigen Bereich gekennzeichnet ist, der von einer gestrichelten

Die von dem Empfänger 29 empfangenen Signale können dann von einer nicht näher dargestellten Auswertevorrichtung ausgewertet und die Auswertung z.B. mittels einer Anzeige angezeigt werden, die in einer den Anhänger 21 ziehenden Zugmaschine angeordnet ist.

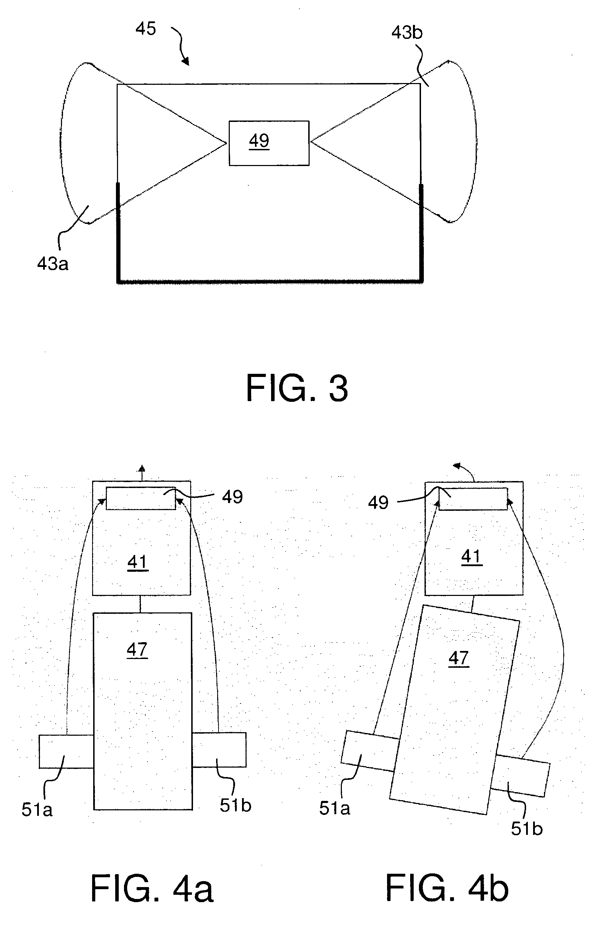

Die Fig. 3 zeigt die Draufsicht des Fahrerhauses 45 eines als Lastkraftwagen ausgebildeten Fahrzeugs, der z.B. als eine in der Fig. 4 gezeigte Sattelzugmaschine 41 ausgebildet ist. Innerhalb des Fahrerhauses 45 ist ein Empfänger 49 angeordnet, der ähnlich dem Empfänger 9 des in der Fig. 1 gezeigten Kraftfahrzeugs 1 ausgebildet ist. Der Empfänger 49 umfasst ebenfalls eine Antenne, deren Empfangsbereich 43a, 43b einstellbar ist. Dies wird z.B. dadurch realisiert, indem die Antenne als eine einstellbare Richtantenne, insbesondere als eine sogenannte Phased-Array-Antenne oder phasengesteuerte Gruppenantenne ausgebildet ist, die mehreren Teilantennen aufweist. Die einzelnen Teilantennen können phasengesteuert angesteuert werden, um die Richtwirkung der Antenne entsprechend dem gewünschten Empfangsbereich 43a, b zu erhalten. Im Falle des vorliegenden Ausführungsbeispiels ist die Antenne derart ausgebildet, dass sie im Wesentlichen nur entweder Signale von der linken Seite oder von der rechten Seite des Fahrzeugs empfangen kann bzw. die entsprechenden Signale zumindest mit einem stärkeren Pegel als die restlichen Signale empfangen kann.

Den Rädern des Fahrzeugs, dessen Fahrerhaus 45 in der Fig. 3 gezeigt ist, sind ebenfalls individuelle Radelektroniken zugeordnet, die entsprechend der Radelektroniken 7a-d der Fig. 1 ausgeführt sind. Die von den Radelektroniken gesendeten Signale kann der Empfänger 49 empfangen, gegebenenfalls auswerten oder einer Auswertevorrichtung weiter leiten, damit z.B. mittels einer Anzeige im Fahrerhaus 45 eine Auswertung der Signale angezeigt werden kann.

Um zumindest zu erkennen, ob die Signale von Radelektroniken stammen, die Rädern auf der rechten Seite des Fahrzeugs zugeordnet sind, wird im Betrieb die Antenne des Empfängers 49 derart betrieben, dass deren Empfangsbereich nach rechts bezüglich des Fahrerhauses 45 gerichtet ist. Dadurch empfängt der Empfänger 49 Signale, die von den linken Radelektroniken stammen mit deutlich geringerem Pegel als Signale, die von den rechten Radelektroniken stammen.

Um zumindest zu erkennen, ob die Signale von Radelektroniken stammen, die Rädern auf der linken Seite des Fahrzeugs zugeordnet sind, wird im Betrieb die Antenne des Empfängers 49 derart betrieben, dass deren Empfangsbereich nach links bezüglich des Fahrerhauses 45 gerichtet ist. Dadurch empfängt der Empfänger 49 Signale, die von den rechten Radelektroniken stammen mit deutlich geringerem Pegel als Signale, die von den linken Radelektroniken stammen.

Um zu erkennen, ob die Signale von Radelektroniken des eigenen Fahrzeugs oder von Radelektroniken eines anderen Fahrzeugs, insbesondere eines hinter oder vor dem Fahrzeug der Fig. 3 stehenden oder fahrenden Fahrzeugs stammen, ist der Empfänger 49 bzw. die Auswertevorrichtung ausgebildet, den Pegel der entsprechenden Signale auszuwerten.

Die Fig. 4 zeigt die Draufsicht der Sattelzugmaschine 41, deren Fahrerhaus 45 in de Fig. 4 gezeigt ist. Die Sattelzugmaschine 41 zieht einen Sattelanhänger 47, dessen Draufsicht ebenfalls in der Fig. 4 gezeigt ist. Die Fig. 4a zeigt dabei die Sattelzugmaschine 41 mit Sattelanhänger 47 während einer Geradeausfahrt und die Fig. 4b zeigt die Sattelzugmaschine 41 mit Sattelanhänger 47 während einer Linkskurve.

Der Empfänger 49, der im Falle des vorliegenden Ausführungsbeispiels im Fahrerhaus 45 der Sattelzugmaschine 41 angeordnet ist, ist auch ausgebildet, Signale von Radelektroniken 51a, 51b drahtlos zu empfangen, die Rädern des Sattelanhängers 47 zugeordnet sind. Insbesondere ist die Radelektronik 51a dem linken Rad und die Radelektronik 51b dem rechten Rad des Sattelanhängers 47 zugeordnet. Die Radelektroniken 51a, b sind analog den Radelektroniken 7a-d des Kraftfahrzeugs 1 der Fig. 1 ausgebildet, senden im Betrieb also eine Nachricht über einen Parameter ihres Rades und/oder des Reifens ihres Rads.

Um zusätzlich Signale von Radelektroniken der Sattelzugmaschine 41 von den Radelektroniken des Sattelanhängers 47 zu unterscheiden, ist der Empfänger 49 bzw. die Auswertevorrichtung derart ausgebildet, dass er aufgrund einer Kurvenfahrt unterscheiden kann, ob die empfangenen Signale vom Sattelanhänger 47 oder von der Sattelzugmaschine 41 stammen. Fährt nämlich die Sattelzugmaschine 41 eine Linkskurve, wie dies in de Fig. 4b gezeigt ist, dann steigt der empfangene Pegel des von der linken Radelektronik 51a stammenden Signals des Sattelanhängers 47 und der Pegel des Signals der rechten Radelektronik 51b des Sattelanhängers 47 sinkt.

Fährt dagegen die Sattelzugmaschine 41 eine Rechtskurve, dann sinkt der empfangene Pegel des von der linken Radelektronik 51a stammenden Signals des Sattelanhängers 47 und der Pegel des Signals der linken Radelektronik 51b des Sattelanhängers 47 sinkt.

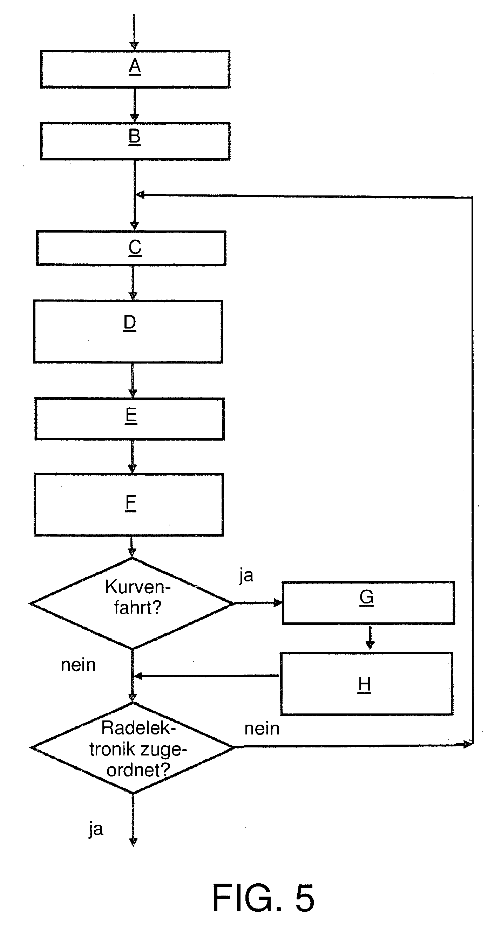

Die Fig. 5 zeigt ein Flussdiagramm, das den Betrieb des Empfängers 49 veranschaulicht.

Zunächst wird der Empfänger 49 initialisiert, um insbesondere die einzelnen Radelektroniken 5a1, 51b des Sattelanhängers 47 zu erkennen bzw. deren Positionen ("links"/ "rechts") zu erkennen, Schritt A des Flussdiagramms.

Anschließend senden die Radelektroniken 51a, 51b ihre Signale, z.B. in vorbestimmten Zeitabständen, Schritt B des Flussdiagramms.

Anschließend wird die Antenne des Empfängers 49 derart betrieben, dass die Richtwirkung dessen Antenne nach links bezüglich der Sattelzugmaschine 41 gerichtet ist, Schritt C des Flussdiagramms.

Der Empfänger 49 bzw. die Auswertevorrichtung analysiert das empfangene Signal bzw. dessen Nachricht insbesondere auch eine empfangene, der relevanten Radelektronik 51a, 5b zugeordneten Identifikationsnummer und der Pegel des empfangenen Signals, Schritt D des Flussdiagramms. Aufgrund der Pegel der empfangenen Signale kann z.B. erkannt werden, ob die Radelektronik des empfangenen Signals links oder rechts am Sattelanhänger 47 und/oder an der Sattelzugmaschine 41 angeordnet ist.

Anschließend wird die Antenne des Empfängers 49 derart betrieben, dass die Richtwirkung dessen Antenne nach rechts bezüglich der Sattelzugmaschine 41 gerichtet ist, Schritt E des Flussdiagramms.

Der Empfänger 49 bzw. die Auswertevorrichtung analysiert das empfangene Signal bzw. dessen Nachricht insbesondere auch eine empfangene, der relevanten Radelektronik 51a, 5b zugeordneten Identifikationsnummer und dem Pegel des empfangenen Signals, Schritt F des Flussdiagramms. Aufgrund der Pegel der empfangenen Signale kann z.B. erkannt werden, ob die Radelektronik des empfangenen Signals links oder rechts am Sattelanhänger 47 und/oder an der Sattelzugmaschine 41 angeordnet ist.

Wird keine Kurvenfahrt der Sattelzugmaschine 41 z.B. aufgrund einer Auswertung eines mit dem Empfänger 49 verbundenen und in oder an der Sattelzugmaschine 41 angeordneten Beschleunigungssensors erkannt und sind die Radelektroniken 51a, b bzw. deren Positionen richtig zugeordnet, dann ist die Zuordnung der Radelektroniken bzw. deren Positionen beendet. Können die Radelektroniken bzw. deren Positionen nicht zugeordnet werden, dann wird mit Schritt C des Flussdiagramms fortgefahren.

Wird eine Kurvenfahrt erkannt, dann wird Richtwirkung der Antenne entsprechend eingestellt, Schritt G des Flussdiagramms. Insbesondere wird bei einer Linkskurve der Sattelzugmaschine 41 die Richtwirkung der Antenne nach links bezüglich der Sattelzugmaschine 41 eingestellt.

Der Empfänger 49 bzw. die Auswertevorrichtung analysiert daraufhin das empfangene Signal bzw. dessen Nachricht insbesondere auch eine empfangene, der relevanten Radelektronik 51a, 5b zugeordneten Identifikationsnummer und der Pegel des empfangenen Signals, Schritt H des Flussdiagramms. Aufgrund der Pegel der empfangenen Signale kann z.B. erkannt werden, ob die Radelektronik des empfangenen Signals dem Sattelanhänger 47 oder der Sattelzugmaschine 41 zugeordnet ist. Können die Radelektroniken 51a, b bzw. deren Positionen richtig zugeordnet werden, dann ist die Zuordnung der Radelektroniken bzw. deren Positionen beendet. Können die Radelektroniken bzw. deren Positionen nicht zugeordnet werden, dann wird mit Schritt C des Flussdiagramms fortgefahren.

### Bezugszeichenliste

- 1: Kraftfahrzeug
- 3a, b: Vorderrad
- 5a, b: Hinterrad
- 7a-d: Radelektronik
- 9: Empfänger
- 11: Antenne
- 11a-d: Teilantenne
- 13a, b: Empfangsbereich
- 21: Anhänger
- 23: Achsen
- 25a-f: Rad
- 27a-f: Radelektronik
- 29: Empfänger
- 31: Antenne
- 33a-c: Empfangsbereich
- 41: Sattelzugmaschine
- 43a, b: Empfangsbereich
- 45: Fahrerhaus
- 47: Sattelanhänger
- 49: Empfänger
- 51a, b: Radelektronik
- A-H: Schritte

## Patentansprüche

1. Fahrzeug, aufweisend einen Fahrzeuggrundkörper, mehrere Räder (3a, b, 5a, b, 25a-f) zum Fortbewegen des Fahrzeugs (1, 21, 41, 47), den Rädern (3a, b, 5a, b, 25a-f) zugeordnete Radelektroniken (7a-d, 27a-f, 51a, b), die eingerichtet sind, wenigstens einen dem entsprechenden Rad (3a, b, 5a, b, 25a-f) und/oder dem Reifen des Rads (3a, b, 5a, b, 25a-f) zugeordneten Parameter zu ermitteln und eine Information über den ermittelten Parameter umfassende Signale drahtlos zu senden, und einen am oder im Fahrzeuggrundkörper angeordneten drahtlosen Empfänger (9, 29, 49) mit einer als Richtantenne ausgebildeten Antenne (11, 31), der eingerichtet ist, mittels seiner Antenne (11, 31) die von den Radelektroniken (7a-d, 27a-f, 51a, b) stammenden Signale drahtlos zu empfangen und die Antenne (11, 31) wahlweise derart einzustellen, dass deren Empfangsbereich (13a, b, 33a-d, 43a, 43b) in verschiedene Richtungen ausgerichtet ist, **dadurch gekennzeichnet, dass** das Fahrzeug (41) eine Vorrichtung zum Erkennen einer Kurvenfahrt des Fahrzeugs (41) aufweist und der Empfänger (49) derart ausgeführt ist, den Empfangsbereich (43a, 43b) seiner Antenne derart wahlweise einzustellen, dass dieser bei einer Linkskurvenfahrt die linke Seite des Fahrzeugs (41) und bei einer Rechtskurvenfahrt die rechte Seite des Fahrzeugs (41) abdeckt.

2. Fahrzeug nach Anspruch 1, bei dem der Empfänger (9, 29, 49) derart ausgebildet ist, den Empfangsbereich (13a, b, 33a-d, 43a, 43b) seiner Antenne (11, 31) wahlweise derart einzustellen, dass der Empfangsbereich (13a, b, 33a-d, 43a, 43b) der Antenne (11,31) auf eine bestimmte der Radelektroniken (7a-d, 27a-f, 51a, b) oder eine Gruppe bestimmter Radelektroniken (7a-d, 27a-f, 51 a, b) gerichtet ist.

3. Fahrzeug nach Anspruch 1 oder 2, bei dem der Empfänger (9, 29) im Wesentlichen zentral bezüglich der Radelektroniken (7a-d, 27a-f) im oder am Fahrzeuggrundkörper angeordnet ist.

4. Fahrzeug nach einem der Ansprüche 1 bis 3, bei dem die als Richtantenne ausgebildete Antenne (11, 31) des Empfängers (9, 29, 49) als eine Phased-Array-Antenne oder phasengesteuerte Gruppenantenne mit mehreren Teilantennen (11a-d) ausgebildet ist, und der Empfänger (9, 29, 49) derart ausgebildet ist, die Teilantennen (11a-d) derart Phasen anzusteuern, um eine Richtwirkung der Richtantenne entsprechend dem gewünschten Empfangsbereich (13a, b, 33a-c, 43a, 43b) zu erhalten.

5. Fahrzeug nach einem der Ansprüche 1 bis 4, aufweisend einen Anhänger (47) und eine den Anhänger (47) ziehende Zugmaschine (41), in oder an deren Fahrzeuggrundkörper der Empfänger (49) angeordnet ist, und der Empfänger (49) eingerichtet ist, die von den Radelektroniken (51 a, b) des Anhängers (47) stammenden Signale zu empfangen.

6. Verfahren zum Zuordnen der Positionen von Radelektroniken (7a-d, 27a-f, 51a, b) eines Fahrzeugs (1, 21, 41, 47) nach Anspruch 5, aufweisend wahlweise Einstellen der Antenne (11, 31) des Empfängers (9, 29, 49) derart, dass deren Empfangsbereich (13a,b, 33a-c, 43a, 43b) in Richtung auf eine bestimmte der Radelektroniken (7a-d, 27a-f, 51a, b) oder eine Gruppe bestimmter Radelektroniken (7a-d, 27a-f, 51a, b) gerichtet ist, und zusätzlich aufweisend folgende Verfahrensschritte:
- Erkennen einer Kurvenfahrt des Fahrzeugs (41, 47) und
- Einstellen des Empfangsbereichs (43a, 43b) der Antenne derart, dass diese bei einer Linkskurvenfahrt die linke Seite des Fahrzeugs (41, 47) und bei einer Rechtskurvenfahrt die rechte Seite des Fahrzeugs (41, 47) abdeckt.

## Claims

1. Vehicle having a vehicle basic body, a plurality of wheels (3a, b, 5a, b, 25a-f), for propelling the vehicle (1, 21, 41, 47), wheel electronics units (7a-d, 27a-f, 51a, b) which are assigned to the wheels (3a, b, 5a, b, 25a-f) and are configured to determine at least one parameter which is assigned to the corresponding wheel (3a, b, 5a, b, 25a-f) and/or to the tyre of the wheel (3a, b, 5a, b, 25a-f), and to transmit in a wireless fashion information by means of signals comprising the determined parameter, and a wireless receiver (9, 29, 49) which is arranged on or in the vehicle basic body and has an antenna (11, 31) which is embodied as a directional antenna and is configured to receive in a wireless fashion the signals originating from the wheel electronics units (7a-d, 27a-f, 51a, b) by means of its antenna (11, 31), and optionally to set the antenna (11, 31) in such a way that the reception range (13a, b, 33a-d, 43a, 43b) of said antenna (11, 31) is oriented in various directions, **characterized in that** the vehicle (41) has a device for detecting cornering of the vehicle (41), and the receiver (49) is designed optionally to set the reception range (43a, 43b) of its antenna in such a way that during left-handed cornering said reception range (43a, 43b) covers the left-hand side of the vehicle (41), and during right-handed cornering said reception range (43a, 43b) covers the right-hand side of the vehicle (41).

2. Vehicle according to Claim 1, in which the receiver (9, 29, 49) is designed optionally to set the reception range (13a, b, 33a-d, 43a, 43b) of its antenna (11, 31) in such a way that the reception range (13a, b, 33a-d, 43a, 43b) of the antenna (11, 31) is directed at a specific one of the wheel electronics units (7a-d, 27a-f, 51a, b) or at a group of specific wheel electronics units (7a-d, 27a-f, 51a, b).

3. Vehicle according to Claim 1 or 2, in which the receiver (9, 29) is arranged essentially centrally with respect to the wheel electronics units (7a-d, 27a-f) in or on the vehicle basic body.

4. Vehicle according to one of Claims 1 to 3, in which the antenna (11, 31), embodied as a directional antenna, of the receiver (9, 29, 49) is embodied as a phased array antenna or phase-controlled group antenna with a plurality of component antennas (11a-d), and the receiver (9, 29, 49) is designed to actuate the component antennas (11a-d) in such a way that a directional effect of the directional antenna is obtained in accordance with the desired reception range (13a, b, 33a-c, 43a, 43b).

5. Vehicle according to one of Claims 1 to 4, having a trailer (47) and a tractive machine (41) which pulls the trailer (47), in or on whose vehicle basic body the receiver (49) is arranged, and the receiver (49) is configured to receive the signals originating from the wheel electronics units (51a, b) of the trailer (47).

6. Method for assigning the positions of wheel electronics units (7a-d, 27a-f, 51a, b) of a vehicle (1, 21, 41, 47) according to Claim 5, having optional setting of the antenna (11, 31) of the receiver (9, 29, 49) in such a way that the reception range (13a, b, 33a-c, 43a, 43b) thereof is directed at a specific one of the wheel electronics units (7a-d, 27a-f, 51a, b) or at a group of specific wheel electronics units (7a-d, 27a-f, 51a, b), and additionally having the following method steps:
- detection of cornering of the vehicle (41, 47), and
- setting of the reception range (43a, 43b) of the antenna in such a way that during left-handed cornering said reception range (43a, 43b) covers the left-hand side of the vehicle (41, 47), and during right-handed cornering said reception range (43a, 43b) covers the right-hand side of the vehicle (41, 47).

## Revendications

1. Véhicule, présentant un corps de base de véhicule, plusieurs roues (3a, b, 5a, b, 25a-f) pour faire avancer le véhicule (1, 21, 41, 47), des électroniques de roue (7a-d, 27a-f, 51a, b) associées aux roues (3a, b, 5a, b, 25a-f), lesquelles sont configurées pour déterminer au moins un paramètre associé à la roue (3a, b, 5a, b, 25a-f) correspondante et/ou au pneu de la roue (3a, b, 5a, b, 25a-f) et pour envoyer sans fil des signaux comprenant une information sur le paramètre déterminé, et un récepteur sans fil (9, 29, 49) disposé sur ou dans le corps de base de véhicule et muni d'une antenne (11, 31) réalisée sous la forme d'une antenne directionnelle, lequel est configuré pour, au moyen de son antenne (11, 31), recevoir sans fil les signaux issus des électroniques de roue (7a-d, 27a-f, 51a, b) et pour régler l'antenne (11, 31) au choix de telle sorte que sa zone de réception (13a, b, 33a-d, 43a, 43b) est orientée dans différentes directions, **caractérisé en ce que** le véhicule (41) présente un dispositif de détection d'une trajectoire en virage du véhicule (41) et le récepteur (49) est configuré de manière à régler la zone de réception (43a, 43b) de son antenne de telle sorte que celle-ci, lors d'une trajectoire de virage vers la gauche, couvre le côté gauche du véhicule (41) et, lors d'une trajectoire de virage vers la droite, couvre le côté droit du véhicule (41).

2. Véhicule selon la revendication 1, avec lequel le récepteur (9, 29, 49) est configuré pour régler la zone de réception (13a, b, 33a-d, 43a, 43b) de son antenne (11, 31) au choix de telle sorte que la zone de réception (13a, b, 33a-d, 43a, 43b) de l'antenne (11, 31) est orientée vers une électronique de roue donnée parmi les électroniques de roue (7a-d, 27a-f, 51a, b) ou un groupe d'électroniques de roue données (7a-d, 27a-f, 51a, b).

3. Véhicule selon la revendication 1 ou 2, avec lequel le récepteur (9, 29) est disposé pour l'essentiel de manière centrée par rapport aux électroniques de roue (7a-d, 27a-f) dans ou sur le corps de base de véhicule.

4. Véhicule selon l'une des revendications 1 à 3, avec lequel l'antenne (11, 31) réalisée sous la forme d'une antenne directionnelle du récepteur (9, 29, 49) est réalisée sous la forme d'une antenne réseau à commande de phase ou d'une antenne groupée à commande de phase comprenant plusieurs antennes partielles (11ad), et le récepteur (9, 29, 49) est configuré pour commander les antennes partielles (11a-d) de manière à obtenir un effet de directivité de l'antenne directionnelle correspondant à la zone de réception (13a, b, 33a-c, 43a, 43b) souhaitée.

5. Véhicule selon l'une des revendications 1 à 4, présentant une remorque (47) et une machine de traction (41) qui tire la remorque (47), dans ou sur le corps de base de véhicule de laquelle est disposé le récepteur (49), et le récepteur (49) est configuré pour recevoir les signaux issus des électroniques de roue (51a, b) de la remorque (47).

6. Procédé pour associer les positions d'électroniques de roue (7a-d, 27a-f, 51a, b) d'un véhicule (1, 21, 41, 47) selon la revendication 5, présentant le réglage au choix de l'antenne (11, 31) du récepteur (9, 29, 49) de telle sorte que sa zone de réception (13a,b, 33a-c, 43a, 43b) est orientée en direction d'une électronique de roue donnée parmi les électroniques de roue (7a-d, 27a-f, 51a, b) ou d'un groupe d'électroniques de roue données (7a-d, 27a-f, 51a, b), et présentant en outre les étapes de procédé suivantes :
- détection d'une trajectoire en virage du véhicule (41, 47) et
- réglage de la zone de réception (43a, 43b) de l'antenne de telle sorte que celle-ci, lors d'une trajectoire de virage vers la gauche, couvre le côté gauche du véhicule (41, 47) et, lors d'une trajectoire de virage vers la droite, couvre le côté droit du véhicule (41, 47).
